# NEUE EUROPÄISCHE PATENTSCHRIFT

(11) **EP 1 738 092 B2**
(45) Veröffentlichungstag und Bekanntmachung des Hinweises auf die Entscheidung über den Einspruch: **09.03.2022**
(45) Hinweis auf die Patenterteilung: 10.06.2015
(21) Anmeldenummer: 05737999.2
(22) Anmeldetag: 07.04.2005
(51) Int. Cl.: F16G 13/16, H02G 11/00, H05F 1/00

(54) **ENERGIEFÜHRENGSKETTE**
POWER CONDUCTION CHAIN
CHAINE DE GUIDAGE D'ELEMENTS DE TRANSPORT D'ENERGIE

(30) Priorität: 08.04.2004 DE 202004005800 U
(43) Veröffentlichungstag der Anmeldung: 03.01.2007
(73) Patentinhaber: igus GmbH, 51147 Köln (DE)
(72) Erfinder: BLASE, Günter, 51429 Bergisch Gladbach (DE); BLASE, Frank, 51429 Bergisch Gladbach (DE)
(74) Vertreter: Lippert Stachow Patentanwälte Rechtsanwälte
(86) Internationale Anmeldenummer: PCT/DE2005/000614
(87) Internationale Veröffentlichungsnummer: WO 2005/098265

(56) Entgegenhaltungen:
- EP-A- 0 063 533
- EP-A1- 1 463 176
- WO-A-02/086349
- WO-A1-99/42743
- DE-A1- 19 962 829
- DE-U1-202004 005 848
- US-B1- 6 354 070
- ATEX: ESD-Energieführungen für planerische Freiheit, 4 March 2016 (2016-03-04), Retrieved from the Internet: URL:www.igus.de/contentData/wpck/pdf/ DE _de/ATEX- ESD_Pressemitteilung.pdf

## Beschreibung

Die Erfindung betrifft eine Energieführungskette zur Führung von Leitungen und Kabeln zwischen zwei Verbrauchern, von denen mindestens einer beweglich ist, wobei die Energieführungskette eine Vielzahl von Gliedern aufweist, die gegenüberliegende Seitenteile und zumindest einen diese verbinden Quersteg aufweisen, wobei die Glieder jeweils durch mindestens eine Gelenkverbindung miteinander verbunden sind, die eine Verschwenkung benachbarter Glieder zueinander über, einen Verschwenkwinkel ermöglicht, so dass die Energieführungskette unter Ausbildung eines Untertrums, eines Umlenkbereichs und eines Obertrums anordenbar ist, und wobei die Glieder zumindest teilweise aus einem elektrisch leitfähigen Material bestehen, welches eine Ableitung von elektrischen Ladungen über zumindest einen Teil der Kettenlänge und damit eine Verwendung der Kette in ESD-Schutzzonen ermöglicht.

Durch die ESD-Tauglichkeit der Kette sollen elektrostatische Aufladungen derselben vermieden werden, so dass die Energieführungskette in sensiblen Bereichen eingesetzt werden kann , wie beispielsweise bei der Herstellung, der Verpackung oder dem Transport von elektrischen oder elektronischen Bauteilen wie Halbleiterelementen oder in explosionsgeschützten Bereichen. Die eingesetzte Energieführungskette ist hierbei in geeigneter Weise elektrisch zu erden, wobei insbesondere eine Erdung der Endbefestigungsglieder der Energieführungskette erfolgt, mittels welcher die Kette an den Verbrauchern befestigt ist.

Bei Energieführungsketten sind zumeist die Glieder durch Gelenkverbindungen in Form von Loch-Zapfen-Verbindungen miteinander verbunden, wobei an den Seitenteilen eines ersten Gliedes seitlich vorstehende Gelenkzapfen in korrespondierende Ausnehmungen der Seitenteile eines benachbarten Gliedes eingreifen. Es hat sich jedoch verschiedentlich herausgestellt, dass die bisher bekannten Energieführungsketten die oben genannten ESD-Anforderungen nicht immer oder nicht ausreichend zuverlässig erfüllen, insbesondere wenn diese aus einem Kunststoffmaterial gefertigt sind, auch wenn das Kunststoffmaterial an sich eine ausreichend hohe elektrische Leitfähigkeit aufweist.

Die EP 0 063 533 beschreibt eine antistatische Förderkette mit Gliedern aus Kunststoff, welche mit elektrisch leitfähigen Teilchen versehen sind, die eine ausreichende elektrische Leitfähigkeit der Glieder bereitstellen, ohne die Festigkeit der Glieder nennenswert zu beeinflussen. Zur elektrischen Erdung der Glieder können elektrisch leitfähige Streifen 28 vorgesehen sein, auf welchen die Glieder gleitend bewegt werden können.

Die WO 02/086349 A beschreibt eine Energieführungskette aus Kunststoffgliedern, welche durch elastisch deformierbare Gelenkelemente miteinander verbunden sind, gemäß dem Oberbegriff des Anspruchs 1.

Der Erfindung liegt daher die Aufgabe zugrunde, eine Energieführungskette zu schaffen, die in ESD-Schutzzonen oder Zonen vergleichbarer Anforderungsprofile stets zuverlässig einsetzbar ist und eine verbesserte Ableitung elektrischer Ladungen über die Energieführungskette ermöglicht.

Diese Aufgabe wird erfindungsgemäß durch eine Energieführungskette gemäß Anspruch 1 gelöst.

Es hat sich herausgestellt, dass durch die erfindungsgemäßen Maßnahmen die Zuverlässigkeit einer Energieführungskette in ESD-Schutzzonen wesentlich erhöht werden kann, so dass die Ketten insbesondere in ESD-Schutzzonen gemäß EN 61390-5-1 oder gemäß anderen vergleichbaren technischen Normen eingesetzt werden können. Durch die erfindungsgemäße Maßnahme wird sichergestellt, dass die Glieder während des gesamten Verschwenkwinkels stets elektrisch leitend miteinander kontaktiert sind, so dass elektrische Ladungen über die Glieder hinweg in Kettenlängsrichtung abgeführt und elektrostatische Aufladungen sicher vermieden werden können. Die benachbarten Gliedern zugeordneten Kontaktbereiche sind somit stets in Anlage miteinander oder durchgehend einstückig ausgebildet. Dem gegenüber wird anscheinend bei Ketten mit ineinandergreifenden Zapfen-Loch-Gelenkverbildungen aufgrund eines möglichen Spiels in den Gelenkverbindungen der Leitfähigkeitspfad unreproduzierbar unterbrochen. Der sich über mehrere Glieder oder die gesamte Energieführungskette durchgehend erstreckende elektrische Leitfähigkeitspfad insgesamt kann somit im Wesentlichen oder vollständig aus einem Kunststoffmaterial bestehen, wodurch zudem - falls notwendig - metallische Werkstoffe vollständig vermieden werden könnten.

Gegebenenfalls können die Glieder zusätzlich derartig ausgeführt sein, dass sie über den gesamten Verschwenkwinkel mit relativ zueinander beweglichen Anlagebereichen stets unter währendem Kontakt der Anlagebereiche aneinander anliegen.

Vorteilhafterweise erstreckt sich der durchgehende elektrische Leitfähigkeitspfad, der durch die genannten Verbindungselemente verläuft, die vorzugsweise jeweils benachbarte Glieder miteinander verbindenden, über die gesamte Länge der Energieführungskette, vorzugsweise einschließlich der Endbefestigungsglieder der Kette. Elektrische Ladungen können so effizient über die gesamte Länge der Energieführungskette abgeleitet werden. Es kann dann ausreichend sein, lediglich die beiden Endglieder der Energieführungskette, die insbesondere als Endbefestigungsteile ausgebildet und mit Mitteln zur Befestigung derselben an den jeweiligen Verbrauchern ausgestattet sein können, zu erden oder mit Erdungseinrichtungen zu versehen. Gegebenenfalls kann sich der durchgehende elektrische Leitfähigkeitspfad auch nur über eine Teillänge der Energieführungskette erstrecken, insbesondere wenn an geeigneten Stellen der Kette die Glieder geerdet oder mit Erdungseinrichtungen verbunden sind, wozu beispielsweise elektrische Anschlüsse für Erdungseinrichtungen vorgesehen sein können. Insbesondere kann der gesamte zwischen den Endbefestigungsgliedern angeordnete Bereich der. Kette einen durchgehenden, vorzugsweise ununterbrochenen Leitfähigkeitspfad bereitstellen, wobei separate Endbefestigungsglieder vorgesehen sind.

Vorzugsweise können derart auf das benachbarte Glied vorstehende Bereiche an jeweils beiden Seitenteilen eines jeweiligen Gliedes vorgesehen sein, die die einander gegenüberliegenden Seitenteile des benachbarten Gliedes jeweils innenseitig oder jeweils außenseitig umgeben und an diesen mit Federkraft anliegen. Hierdurch können die Glieder jeweils symmetrisch zwischen den unter Federkraft anliegenden Bereichen eingezwängt sein, wodurch ein sicherer elektrischer Kontakt erzielt wird. Zugleich kann bei geeigneter Steifigkeit der vorstehenden Bereiche die Seitenstabilität der Energieführungskette erhöht werden.

Nach einer weiteren vorteilhaften Ausführungsform sind mehrere oder sämtliche Glieder, vorzugsweise in Kettenlängsrichtung unmittelbar aufeinanderfolgende Glieder, paarweise zumindest durch ein Verbindungselement verbunden, welches mit voneinander in Kettenlängsrichtung beabstandeten Befestigungsbereichen an jeweils einem der Glieder festgelegt ist, wobei das Verbindungselement bei der Verschwenkung der Gliederzueinander elastisch deformiert wird. Das Verbindungselement ist in seinen Befestigungsbereichen vorzugsweise kraftschlüssig und vorzugsweise lageunveränderlich an den jeweiligen Gliedern festgelegt, wozu der jeweilige Befestigungsbereich im Presssitz in einer entsprechenden Aufnahme des jeweiligen Gliedes gehalten sein kann. Insbesondere kann die Festlegung kraft- und formschlüssig erfolgen. Die Aufnahme für den Befestigungsbereich des Verbindungselementes ist vorzugsweise in Kettenlängsrichtung, d. h. in Richtung auf das jeweils benachbarte Glied hin geöffnet, so dass das Verbindungselement die benachbarten Glieder praktisch überbrückt und hierdurch einen durchgehenden Leitfähigkeitspfad bereitstellen kann. Durch die Halterung des Verbindungselementes an dem Glied, vorzugsweise im Presssitz, wird stets ein geringen Übergangswiderstand zwischen den Gliedern und dem Verbindungselement gewährleistet.

Es versteht sich, dass die Aufnahme für das Verbindungselement an dem jeweiligen Glied als zum Ketteninneren oder zum Kettenäußeren hin oder gegebenenfalls auch zu der oberen oder unteren, in Kettenlängsrichtung verlaufenden Schmalseite des Seitenteils gerichtete Öffnung des Seitenteils ausgeführt sein kann. Diese Öffnung kann im Wesentlichen der Kontur des Längsschnittes des Verbindungselementes entsprechen, so dass dieses von der Seite her in die Ausnehmung eingeführt bzw. unter Druckkraft eingepresst wird, um an dem Glied verschiebungssicher festgelegt zu sein. Vorzugsweise weist das Verbindungselement Querschnittserweiterungen oder Querschnittsverengungen auf, die mit korrespondierenden Querschnittsverengungen oder Querschnittserweiterungen des Gliedes korrespondieren und eine vorzugsweise linienförmige oder flächige Halterung ermöglichen, wodurch in Kettenlängsrichtung das Verbindungselement auch bezüglich der Kettenlängsrichtung und ggf. auch in Kettenquerrichtung formschlüssig festgelegt werden kann.

Die elastische Deformation des Verbindungselementes bei der Verschwenkbewegung der vorzugsweise benachbarten Glieder zueinander kann insbesondere in Art einer Biegebeanspruchung erfolgen, wobei die maximale Abbiegung dem maximalen Verschwenkwinkel der Glieder zueinander entsprechen kann. Das Verbindungselement weist hierzu zumeist in Kettlängsrichtung beabstandete Haltebereiche zur Kraftankoppelung an den zu verbindenden Gliedern und einen dazwischen angeordneten, biegebeanspruchten Bereich auf.

Alternativ kann das Verbindungselement bei der elastischen Deformation auch im Wesentlichen einer Torsionsbeanspruchung ausgesetzt sein. Dies ist insbesondere dann möglich, wenn die Kettenglieder jeweils seitlich überlappende Seitenteile aufweisen, in welchen jeweils auf den Überlappungsbereich des benachbarten Gliedes hin geöffnete Ausnehmungen vorgesehen sind, die vorzugsweise in Querrichtung zur Kette fluchtend zueinander angeordnet sind. Das Verbindungselement kann hierbei im Wesentlichen in Art eines Zylinders ausgeführt sein, wobei die Zylinderenden in den gegenüberliegenden überlappenden Bereichen der benachbarten Glieder angeordnet sind und jeweils mit nichtrunden Bereichen zur Bereitstellung einer Verdrehsicherung ausgestattet sein können. Hierzu können auch entsprechende Fortsätze an den Enden des Verbindungselementes vorgesehen sein. Bei einer Verschwenkung der Glieder wird der mittlere Bereich des zylinderförmigen Verbindungselementes dann torsionsbeansprucht. Das Verbindungselement ist hierbei vorzugsweise vollständig in dem Querschnittsbereich angeordnet, der durch die beiden überlappenden Bereiche der benachbarten Glieder definiert wird.

Vorzugsweise ist das Verbindungselement als elastisch deformierbares Element ausgeführt, welches nach einer elastischen Deformation eine Rückstellkraft auf die durch das Element verbundenen Glieder ausübt. Es versteht sich, dass sämtliche Ausführungen bezüglich der Erfindung auch für deformierbare Verbindungselemente gelten können, die nach einer Deformation keine Rückstellkräfte auf die Glieder ausüben.

Das Verbindungselement kann, insbesondere wenn es unter Biegebeanspruchung belastet wird, teilweise oder vollständig zwischen der ketteneinwärts gerichteten Innenseite und der kettenauswärts gerichteten Aussenseite der Seitenteile bzw. zwischen den lateralen Seiten der Querstege angeordnet sein, so dass von dem Seitenteil oder Quersteg vorzugsweise nicht lateral vorsteht. Das Verbindungselement kann hierbei jeweils zwischen der Oberseite und der Unterseite des jeweiligen Gliedes angeordnet sein. Das Verbindungselement kann alternativ auch teilweise oder vollständig im Ketteninneren angeordnet sein, beispielsweise zwischen gegenüberliegenden Innenseiten der Seitenteile eines Gliedes oder in in Kettenlängsrichtung verlaufenden Durchgangsöffnungen in den oberen oder unteren Querstegen oder Seitenteilen der Glieder. Die Breite des Verbindungselementes kann insbesondere jeweils der Breite bzw. Stärke des Seitenteils oder der Breite des Quersteges, d.h. dessen Erstreckung in Kettenquerrichtung, entsprechen. Das Verbindungselement kann hierbei jeweils zwei aber auch drei oder mehr Glieder der Kette miteinander verbinden und sich beispielsweise über ein Viertel, die Hälfte oder über die gesamte Kette erstrecken. Zwischen den jeweils vorzugsweise elastisch deformierbaren Bereichen des Verbindungselementes, die in Kettenlängsrichtung beabstandet sind, kann das elastisch deformierbare Verbindungselement Übergangsbereiche aufweisen, die sich jeweils zwischen den deformierbaren Bereichen erstrecken und diese miteinander verbinden. Die Übergangsbereiche können beispielsweise außenseitig an den Gliedern vorbeigeführt sein oder sich durch in Kettenlängsrichtung verlaufende Durchgangsöffnungen oder Nuten der Glieder erstrecken, die gegebenenfalls auch zu eine Seite hin offen ausgeführt sein können. Vorzugsweise sind die Übergangsbereiche jeweils bezogen auf den Kettenquerschnitt schmaler als die Gelenkbereiche der Verbindungselemente.

Das Verbindungselement kann im allgemeinen und insbesondere bei den oben beschriebenen Ausführungsformen jeweils das Gelenkelement darstellen, welches die gelenkige Verbindung der benachbarten Glieder miteinander bildet und bei der Bewegung der Kette zwischen den Gliedern übertragene Kräfte, insbesondere Zug- und Schubkräfte, aufnimmt. Alternativ oder zusätzlich kann das Verbindungselement auch bezüglich der Gelenkverbindungen in Form einer zusätzlichen Einrichtung vorgesehen sein und hierzu derart an den Gliedern befestigt sein, dass die bei der Bewegung der Kette wirkenden Kräfte im wesentlichen von anderen Bereichen der Kette aufgenommen werden. Die Einrichtung dient dann im wesentlichen nur der elektrischen Ableitung. Das Verbindungselement kann beispielsweise als an mehreren Gliedern befestigtes strangförmiges Verbindungselement ausgeführt sein, dass gegenüber über dem jeweiligen Glied lageveränderlich ist oder lageveränderliche Bereiche aufweist, beispielsweise in Art einer Rutschkupplung an dem Glied befestigt ist oder Längenausgleichs- oder Dehnbereiche aufweist. Auch diese Einrichtung kann gegebenenfalls mit Teilen der Glieder, beispielsweise den Querstegen oder Seitenteilen, einstückig angeformt sein.

Die Anlagebereiche der Glieder zur Bereitstellung eines durchgehenden elektrischen Leitungspfades können jeweils einstückig an zumindest einem oder beiden Gliedern, die durch den Anlagebereich oder das Verbindungselement elektrisch verbunden werden, angeformt sein. Die Anlagebereiche können auch an jeweils beiden Gliedern lösbar befestigt sein.

Allgemein können jeweils ein oder mehrere Verbindungselemente vorgesehen sein, die mehr als zwei Glieder miteinander verbinden, beispielsweise drei, vier oder mehr Glieder oder sich durchgehend über ein zumindest Viertel, zumindest die Hälfte oderdie gesamte Ketten in Längsrichtung erstrecken. Vorzugsweise verbinden die Verbindungselemente auch jeweils die Endbefestigungsgliedern, die geerdet oder mit Erdungseinrichtungen versehen sein können, elektrisch leitend mit den jeweils benachbarten Kettengliedern. Hierzu können die zwischen den Gliedern wirkenden elektrisch kontaktierenden Anlagebereiche oder Verbindungselemente oder auch andere Kontaktelemente vorgesehen sein. Ferner können innerhalb der Kette, d.h. benachbart den Endbefestigungsgliedern der Kette oder beabstandet von diesen, geerdete Kettenglieder oder Glieder mit Erdungseinrichtungen, beispielsweise in Form einer Befestigung für eine elektrische Ableitung, vorgesehen sein. Der Abstand beträgt vorzugsweise mehrere Glieder, beispielsweise ein Viertel der Kette oder mehr. Das Verbindungselement erstreckt sich dann vorzugsweise durchgehend von einem geerdeten Glied bzw. einem mit einer Erdungseinrichtung verbundenen oder verbindbarem Glied bis zu einem anderen derartigen Glied bzw. einem Endbefestigungsteil der Kette, welches ebenfalls vorzugsweise geerdet ist oder mit einer Erdungseinrichtung versehen oder bestückbar ist, so dass in diesen Bereichen ein durchgehender elektrischer Leitfähigkeitspfad bereitgestellt wird. Die elektrischen Ladungen können dann über die jeweils geerdeten Glieder schnell abgeleitet werden.

Gegebenenfalls können auch zwei oder mehr Verbindungselemente vorgesehen sein, die eine vorgegebene Gruppe von mehr als zwei Gliedern miteinander verbinden.

Insbesondere kann das Verbindungselement, welches eine elektrische Ableitung ermöglicht und mehrere Glieder gelenkig miteinander verbindet, bandförmig ausgebildet sein, wobei die Glieder an oder auf dem Band befestigt sein können, so dass da Band vorzugsweise nur einseitig mit den Gliedern befestigt ist. Das Verbindungselement kann innerhalb oder außerhalb der Kanals zur Führung der elektrischen Leitungen angeordnet sein. Die Breite des Verbindungselement kann in etwa der Erstreckung der Bodenelemente der Glieder quer zur Kette oder der Breite der Glieder entsprechen. Das bandförmige Verbindungselement kann hierbei auf der Oberseite der Bodenelemente der Glieder, d.h. dem Ketteninneren zugewandt, oder auf der dem Ketteninneren abgewandten Seite der Bodenelemente der Glieder befestigt sein oder gegebenenfalls durch Schlitze oder Haltebereiche der Bodenelemente oder der Seitenteile durchgeführt sein. Das Band kann auch an den Schmalseiten der Seitenteile befestigt sein.

Das Verbindungselement kann, insbesondere wenn es als sich über mehere Glieder oder die gesamte Kette erstreckendes Band ausgeführt ist, an den Gliedern lösbar befestigt sein, beispielsweise mittels geeigneter Rastverbindungen, die Glieder können auch unlösbar an dem Band befestigt sein.

Das elektrisch leitende Verbindungselement kann ferner beispielsweise als Filmscharnier ausgebildet sein, durch welches die benachbarten Glieder gelenkig miteinander verbunden werden. Das Verbindungselement kann hierbei an den Seitenteilen oder Bodenelementen, beispielsweise jeweils an den auf das benachbarte Glied zuweisenden Stirnseiten derselben, angeordnet sein. Insbesondere auch bei dieser Ausführungsform können die Glieder mit seitlichen Bereichen vorgesehen sein, welche in Richtung auf das benachbarte Glied vorspringen und dieses teilweise überlappen, beispielsweise auf der Innenseite oder Außenseite der Seitenteile. Es versteht sich, dass gegebenenfalls diese Bereiche zusätzlich als elektrisch leitende Verbindungsbereiche ausgeführt sein können, die über den gesamten Verschwenkwinkel der Glieder unter währender Anpresskraft an den Seitenteilen der benachbarten Glieder anliegen. Unabhängig von dieser Ausgestaltung ist es jedoch vorteilhaft, wenn die Anlagebereiche und/oder die Verbindungselemente, die elektrisch leitfähig ausgebildet sind, unter Presskraft an dem jeweils benachbarten Glied anliegen.

Die Anlagebereiche können jeweils aus demselben aber auch aus einem unterschiedlichen Material gefertigt sein, wie die anderen Bereiche der Glieder, z.B. die Seitenteile oder Bodenelemente, insbesondere aus einem Material mit einer höheren spezifischen elektrischen Leitfähigkeit.

Vorzugsweise bestehen die Anlagebereiche der Glieder, insbesondere die Bereiche der Energieführungskette, welche einen durchgehenden Leitfähigkeitspfad bilden und die genannten Anlagebereiche te umfassen, aus einem Material mit einem geringen spezifischen elektrischen Widerstand. Hierdurch wird eine besonders wirksame Ableitung elektrischer Ladungen von der Energieführungskette ermöglicht. Vorzugsweise bestehen die Seitenteile und/oder Bodenelemente der Glieder vollständig aus einem derartigen Material, insbesondere einem Kunststoffmaterial.

Der Gesamtwiderstand der Energieführungskette über deren gesamte Länge beträgt vorzugsweise kleiner/gleich 50.000 oder 20.000 Ohm, vorzugsweise kleiner/gleich 10.000 Ohm, besonders bevorzugt 10.000 bis 6.000 Ohm oder auch kleiner. Dies gilt insbesondere für Energieführungsketten bei welchen die Glieder und die Verbindungselemente überwiegend oder vollständig aus einem Kunststoffmaterial bestehen.

Ferner kann die erfindungsgemäße Energieführungskette über die Länge derselben einen elektrischen Oberflächenwiderstand Rₛ und/oder einen Endzu-End-Widerstand Rₑ und/oder einen Punktzu-Punkt-Widerstand Rₚ von ≤ 1 x 10¹⁰ Ohm aufweisen, vorzugsweise jeweils ≤ 1 x 10⁶ Ohm oder ≤ 1 x 10⁴ Ohm, beispielsweise in dem Bereich von 1 x 10⁴ ≤ Rₚ ≤ 1 x 10¹⁰ Ohm.

Zusätzlich oder alternativ ist die erfindungsgemäße Energieführungskette derart ausgeführt, dass diese einen elektrischen Widerstand zu EPA-Erde und/oder zu einem Erdungspunkt R_{g} von ≤ 1 x 10¹² ihm, vorzugsweise ≤ 1 x 10⁹ Ohm aufweist. Vorzugsweise liegt der genannte Widerstand in dem Bereich von 7,5 x 10⁵ ≤ R_{g} ≤ 1 x 10⁹ Ohm.

Bei den oben angegebenen Werten des Gesamtwiderstandes, Oberflächenwiderstand Rₛ, End-zu-End-Widerstand Rₑ und/oder Punkt-zu-Punkt-Widerstand Rₚ, Widerstand zu EPA-Erde oder zu einem Erdungspunkt sind vorzugsweise die Endbefestigungsteile jeweils mit umfasst. Der jeweils genannte elektrische Widerstand kann auch jeweils zwischen zwei Gliedern bestehen, die jeweils durch eine geeignete elektrische, vorzugsweise metallische, Ableitung geerdet sind oder mit einer geeigneten Erdungseinrichtung oder einem vorzugsweise elektrisch leitenden Befestigungsmittel für eine solche versehen sind. Die Erdungseinrichtung kann im einfachsten Fall ein Anschlusspunkt sein, der zum elektrischen Anschluss einer elektrischen Ableitung ausgebildet ist. Die geerdeten oder mit Erdungseinrichtungen oder Befestigungsmitteln für diese versehen Glieder sind vorzugsweise gleichmäßig über die Länge der Leitungsführungseinrichtung verteilt.

Es versteht sich, dass die Energieführungskette sämtliche sonstigen Erfordernisse gemäß der DIN EN 61340-5-1 oder entsprechender nationaler oder internationaler Normen erfüllen kann. Die Kette kann hierbei gegebenenfalls im Sinne einer Arbeitsoberfläche gemäß Tabelle 1 dieser EN-Norm verstanden werden. Es versteht sich, dass die jeweilige Bestimmung der genannten Widerstände ebenfalls nach dieser Norm erfolgen kann. Bezüglich der Erfordernisse einer EPA-Erdungseinrichtung bzw. eines EPA-Erdungsanschlusspunktes sei auf Abschnitt 5.3 der EN 61340-5-1: 2001 verwiesen, bezüglich des Widerstandsmessverfahrens zum Prüfen von Arbeitsoberflächen auf. Abschnitt A.1 der EN 61340-5-1:2001 verwiesen, bezüglich des Gerätes für Widerstandsmessuhgen auf Anhang A.1 der DIN-Norm IEC 1340-4-1, bezüglich der Ausbildung von Elektroden zur Messung der jeweiligen Widerstände sei auf die DIN 53482 bzw. die DIN IEC 60093 verwiesen. Sämtliche oben genannten Normen seien hiermit als. Referenz mit eingeschossen. Es versteht sich, dass gegebenenfalls aber auch andere einschlägige Normen herangezogen werden können.

Um ein Material mit einer ausreichend hohen elektrischen Leitfähigkeit bereitzustellen kann die Oberfläche der jeweiligen Glieder, einschließlich der Oberfläche des mehrere Glieder miteinander verbindenden Bodenelementes, die jeweils insbesondere als Kunststoffteile gefertigt sein können, mit einer leitfähigen Beschichtung versehen sein, beispielsweise mit einer Graphitierung oder einer Beschichtung mit einem metallischen oder halbleitenden Werkstoff, beispielsweise auch durch Galvanisierung, Bedampfungsverfahren oder dergleichen. Ferner können alternativ oder zusätzlich flüchtige Antistatika in das Material der Leitungsführungseinrichtung, insbesondere im Bereich der Seitenteile und/oder des Bodenelementes bzw. in den Anlagebereichen oder an den Haltebereichen der Verbindungselemente inkorporiert sein. Besonders bevorzugt weist das Material intrinsisch eine entsprechende Volumenleitfähigkeit oder Oberflächenleitfähigkeit auf, um die genannten Bedingungen zu erfüllen, wozu das Kunststoffmaterial beispielsweise mit entsprechenden die elektrische Leitfähigkeit erhöhenden Füllstoffen versehen sein kann, wie beispielsweise Kohlefasem, Fasern metallischer oder halbleitender Materialien, metallische oder halbleitende Pulver wie Aluminium- oder Siliciumpulver, Ruß, Salze wie beispielsweise Lithiumsalze oder dergleichen. Schließlich können in das Bodenteil sich auch über die Verbindungselemente und/oder jeweils mehrere Glieder oder die gesamte Kette erstreckende Ableitdrähte eingearbeitet sein, beilspielsweise metallische Ableitdrähte. Es versteht sich, dass die entsprechende Leitfähigkeit auch auf eine andere geeignete Weise erzeugt werden kann.

Insgesamt gesehen ist es hierdurch möglich, eine Leitungsführungseinrichtung für ESD-Schutzzonen (ESD: "electrostatic sensitive device", teilweise auch in der Bedeutung von "electrostatic sensitive device") und/oder für explosionsgefährdete Bereiche bereitzustellen.

Die Erfindung sei nachfolgend beispielhaft beschrieben und anhand der Figuren beispielhaft erläutert. Es zeigen:
- Figur 1: eine erste Ausführungsform einer erfindungsgemäßen Energieführungskette in perspektivischer Darstellung (Figur 1A) und in Seitenansicht (Figur 1B),
- Figur 2: eine weitere Ausführungsform einer erfindungsgemäßen Energieführungskette in Schnittansicht (Figur 2A) und in Seitenansicht (Figur 2B),
- Figur 3: eine weitere Ausführungsform einer nicht erfindungsgemäßen Kette in perspektivischer Darstellung,
- Figur 4: eine weitere Ausführungsform einer erfindungsgemäßen Energieführungskette in Seitenansicht (Figur 4A) und frontseitige und seitliche Ansichten eines Kettengliedes (Figuren 4B, 4C).

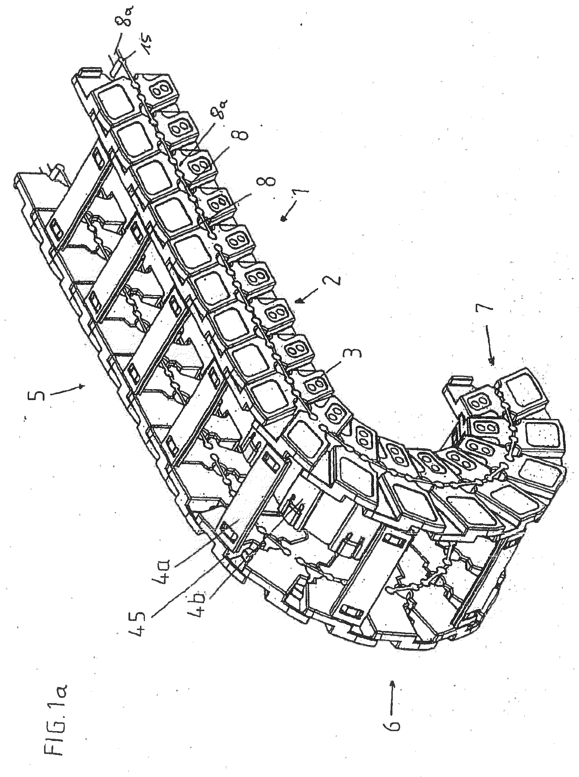

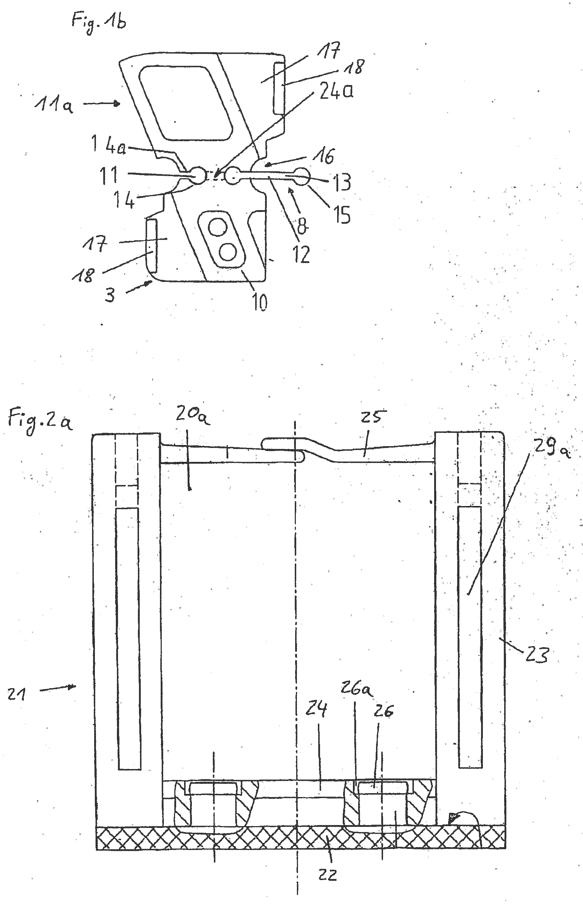

Figur 1 zeigt in einer ersten Ausführungsform eine erfindungsgemäße Energieführungskette 1 mit einer Vielzahl von gelenkig miteinander verbundenen Gliedern 2, die jeweils aus zwei gegenüberliegenden Seitenteile 3, zumindest einem Deckelelement 4a in Form eines die beiden Glieder miteinander verbindenden Quersteges und zumindest einem Bodenelement 4b in Form eines weiteren Quersteges bestehen. Gemäß dem Ausführungsbeispiel sind nur einige der Glieder mit entsprechenden Bodenelementen und Deckelelementen ausgestattet, um so die beiden gegenüberliegenden Laschenstränge voneinander zu beabstanden. Die Energieführungskette ist unter Ausbildung eines Obertrums 5, eines Umlenkbereichs 6 und eines Untertrums 7 angeordnet. Die einzelnen Glieder 2 sind gelenkig durch separate, vorzugsweise lösbar befestigte Verbindungselemente 8 miteinander verbunden, die bei der Fahrbewegung der Kette unter Biegebeanspruchung belastet werden und unter Ausbildung einer Rückstellkraft elastisch deformierbar sind.

Die Seitenteile 3, insbesondere die Bereiche zwischen benachbarten Verbindungselementen 8 eines Seitenteils sowie auch die Verbindungselemente bestehen aus einem Kunststoffmaterial mit einer hohen spezifischen elektrischen Leitfähigkeit. Es versteht sich, dass vorzugsweise auch die Boden- und Deckelelemente 4a, 4b aus einem derartigen Material bestehen.

Die Verbindungselemente 8 sind in Ausnehmungen 11 der Seitenteile 3 gehaltert, welche zur Stirnseite 11a, d.h. in Richtung auf das benachbarte Glied offen ausgeführt sind. Ferner sind die Ausnehmungen 11 zumindest zu einer Seitenfläche, nach dem Ausführungsbeispiel zu beiden Seitenflächen hin, offen ausgeführt, so dass die Verbindungselemente 8 seitlich in die Ausnehmungen 11 eingeführt werden können. Die Verbindungselemente 8 weisen verbreiterte Befestigungsbereiche 15 auf, die in die Querschnittserweiterung 14 der Ausnehmung 11 eingreifen, um so bei Zugkraftausübung in Kettenlängsrichtung eine formschlüssige Halterung der Verbindungselemente zu gewährleisten. Es versteht sich, dass ein Formschluss auch auf andere geeignete Weise erzielt werden kann. Unabhängig hiervon werden die Verbindungselemente auch kraftschlüssig gegen seitliche Verschiebung gesichert in den Ausnehmungen 11 gehaltert, wozu die Verbindungselemente unter Presskraft in die Ausnehmungen zwischen die Backen 14a einzudrücken sind, wodurch zugleich eine guter elektrischer Übergang zwischen den Bauteilen hergestellt wird. Es können zusätzliche Mittel vorgesehen sein, um die Verbindungselemente in Querrichtung zu sichern. Eine elastische Deformation der Verbindungselemente wird dadurch erleichtert, dass zwischen den gegenüberliegenden Ausnehmungen 11 auf Höhe des deformierbaren Bereichs 12 eine Aussparung 16 der Glieder vorgesehen ist, die hier in etwa halbkreisförmig ausgeführt ist.

Gemäß Figur 1 können die sich die Verbindungselemente 8 in Kettenlängsrichtung über jeweils mehrere Glieder erstrecken, wozu zwischen den Befestigungsbereichen 15 Übergangsbereiche 8a vorgesehen sind, deren Breite geringer als die der biegeelastisch beanspruchten Bereiche 12 ist, welche die Breite der Seitenteile einnehmen können. Das Verbindungselement 8 kann sich hierdurch auch über die gesamt Kettenlänge erstrecken und einen durchgehenden Leitfähigkeitspfad bereitstellen. Die Übergangsbereiche sind somit in Nuten (gestrichelt dargestellt) geführt, die in den stegartigen Bereichen 24a der Glieder vorgesehen sind.

Die Verbindungselemente 8 bestehen aufgrund der Biegebeanspruchung aus einem anderen Material als die Seitenteile. Die Verbindungselemente bestehen aus einem Material mit einer höheren spezifischen elektrischen Leitfähigkeit als das der Glieder, insbesondere da die Gesamtlänge der Verbindungselemente die Längserstreckung der stegförmigen Bereiche 24a in Kettenlängsrichtung übersteigt. Insgesamt wird so durch die Verbindungselemente 8 und die zwischen diesen verbleibenden stegförmigen Bereiche 24a der Glieder ein durchgehender elektrischer Leitfähigkeitspfad der Kette bereitgestellt, über den elektrische Ladungen mit geringem elektrischem Widerstand zu den Endbefestigungsteilen oder Endgliedern der Kette, die geerdet sind, oder zu anderen geerdeten Gliedern der Kette abfließen können. Die Gelenkelemente, vorzugsweise einschließlich deren Verbindungsbereiche, wenn sich die Gelenkelemente über mehrere Glieder oder die gesamte Kette erstrecken, können insbesondere durch Oberflächenbehandlungsverfahren elektrisch leitfähig gemacht worden sein, beispielsweise durch Galvanisierung, Bedampfung, insbesondere mit Metallen oder halbleitenden Materialien, oder dergleichen. Dies gilt entsprechend auch für andere Ausführungsformen der erfindungsgemäßen Kette mit separaten Gelenkelementen, z.B. in Form von Bändern. Es können aber auch Teilbereiche anders ausgeführter Kette entsprechend oberflächenbehandelt sein, um einen durchgehenden elektrischen Leitfähigkeitspfad bereitzustellen.

Die Seitenteile der Glieder weisen weiterhin überlappende Bereiche 17 auf, welche mit seitlich vorstehenden Vorsprüngen 18 versehen sind, die gleichzeitig als Anschläge dienen können. Die Vorsprünge 18 greifen in entsprechende Öffnungen der benachbarten Glieder, die in Richtung auf den Überlappungsbereich des benachbarten Gliedes hin geöffnet sind, ein. Gegebenenfalls können diese überlappenden Bereiche über den gesamten Verschwenkwinkel unter währender Anpresskraft aneinander anliegen, wozu beispielsweise die Vorsprünge 18 ausreichend weit axial vorstehen. Bei geeigneter Materialwahl der jeweiligen Bereiche kann auch hierdurch eine über die gesamte Verschwenkbewegung der Glieder währende elektrische Kontaktierung benachbarter Glieder miteinander erfolgen. Aufgrund der hierdurch erhöhten Reibungsverluste bei einer Bewegung der Kette kann eine derartige Maßnahme auch entbehrlich sein.

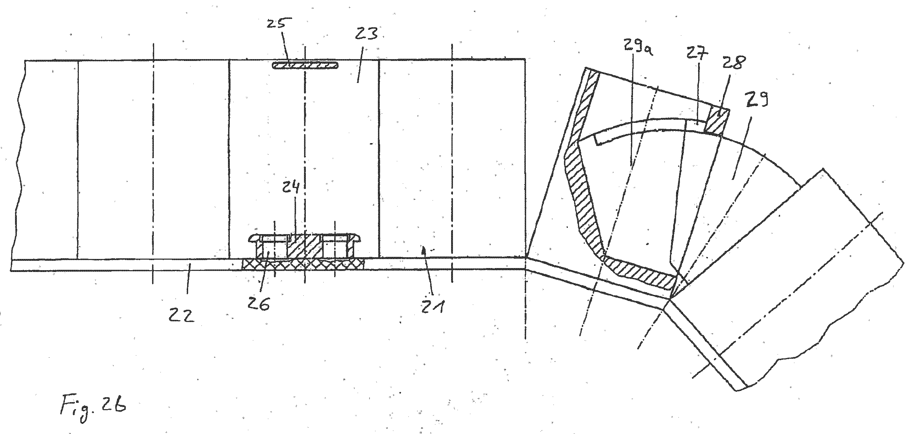

Figur 2 zeigt ein weiteres Ausführungsbeispiel einer Kette 20, welche eine Vielzahl von Gliedern 21 aufweist, die auf einem bandförmigen Gelenkelement 22 befestigt sind. Die Glieder weisen auch hier wieder jeweils unter Bildung eines Kabelführungskanals 20a gegenüberliegende Seitenteile 23 und ein diese verbindendes Bodenelement 24 auf, wobei das obere Deckelelement 25 als durchbrochener Quersteg ausgeführt ist. Durch das bandförmige Gelenkelement 22 wird wiederum ein durchgehender elektrischer Leitfähigkeitspfad bereitgestellt, hierzu weist das das Band bildende Material eine hohe spezifische elektrische Leitfähigkeit auf, die höher als die spezifische Leitfähigkeit des Materials der Glieder ist. Die Glieder, genauer die Unterseiten der Bodenelemente und/oder der Seitenteile, sind hier unter Bereitstellung elektrischer Kontaktbereiche mit einer gewissen Anpresskraft auf dem Band befestigt. Hierzu sind an dem Band Rastvorsprünge 26 vorgesehen, die in mit einer Hinterschneidung versehene Ausnehmungen 26a der Bodenelemente eingreifen und die Glieder unter einer gewissen Vorspannung an dem Band andrücken. Es versteht sich, dass gegebenenfalls die Rastvorsprünge auch an den Bodenelementen und an dem Band entsprechende Rastausnehmungen vorgesehen sein können. Neben den Rastmitteln mit den Rastaufnahmen werden erfindungsgemäße Kontaktbereiche zwischen Band und Glied, wie auch in den anderen ähnlichen Ausführungsformen, zudem auch durch die dem Band zugewandten Seiten der Querstege oder Bodenelemente, was die dem Führungskanal zu- oder abgewandte Seite sein kann, und der Anlagefläche des Bandes bereitgestellt.

Weiterhin weisen die Glieder seitliche Führungselemente 29 auf, die Teilbereiche der Seitenteile der benachbarten Glieder umgreifen und hierzu in Taschen 29a derselben eingreifen und gegebenenfalls mit einer gewissen Vorspannung seitlich an den Seitenteilen der benachbarten Glieder anliegen können, um zusätzlich zu dem Band eine elektrische Ableitung von Ladungen über die Führungselemente zu ermöglichen. Vorwiegend dienen diese Führungselemente jedoch dazu, die Seiten- bzw. Querstabilität der Kette zu.erhöhen und um gegebenenfalls Anschläge durch die Vorsprünge 27 bereitzustellen, welche die lateralen Vorsprünge 28 der Seitenteile hintergreifen. Es versteht sich, dass das Band 22 sich durchgehend und einteilig über die gesamte Länge der Kette erstrecken kann, gegebenenfalls können auch zwei oder mehrere Bänder hintereinander angeordnet sein. In letzterem Fall ist dann vorzugsweise das die jeweils zwei Bänder verbindende Glied ebenfalls aus einem Material hoher elektrischer Leitfähigkeit oder es ist ein zusätzlicher elektrischer Überbrückungskontakt vorgesehen.

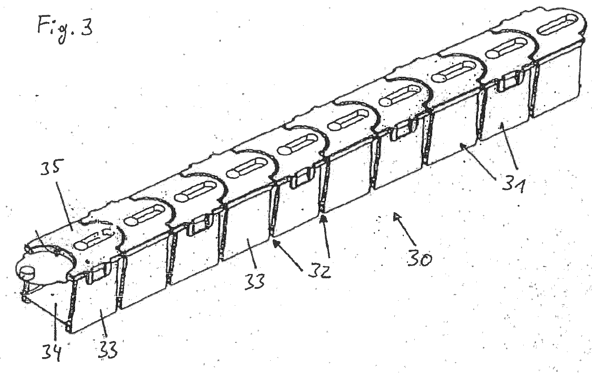

Figur 3 zeigt eine ähnlich zu Figur 2 aufgebaute nicht erfindungsgemäße Kette 30, wobei jedoch die einzelnen Glieder 31 der Kette durch einstückig angeformte Gelenkelemente 32 miteinander verbunden sind. Auch hier weisen zumindest einige oder alle Glieder 31 unter Ausbildung eines Kabelführungskanals gegenüberliegende Seitenteile 33 und ein diese verbindendes Bodenelement 34 sowie ein Deckelelemente 35 auf. Die Gelenkelemente 32 bilden zusammen mit den Bodenelementen ein durchgehendes Band, wobei die Gelenkelemente in Art von Filmscharnieren ausgeführt sein können aber auch die Materialstärke der Bodenelemente haben können, wozu im Gelenkbereich die Seitenteile 33 geringfügig beabstandet sind. Die Kette kann über deren gesamte Länge einstückig hergestellt sein. Gegebenenfalls können auch mehrere einstückig ausgeführte Segmente, die sich über jeweils eine Vielzahl von Gliedern erstrecken, miteinander verbunden sein. Die gesamte Kette oder die einzelnen Segmente können jeweils aus einem einheitlichen Material mit einer hohen spezifischen elektrischen Leitfähigkeit bestehen, wie zum ersten Ausführungsbeispiel angegeben. Die Kette ist hier als einstückiges Spritzgussteil hergestellt, gegebenenfalls können auch extrudierte Formteile entsprechend als Kette ausgebildet werden. Die Glieder können eine Steifigkeit aufweisen, so dass diese unter üblichen Betriebsbedingungen im wesentlichen starr sind, ohne dass dies immer zwingend ist.

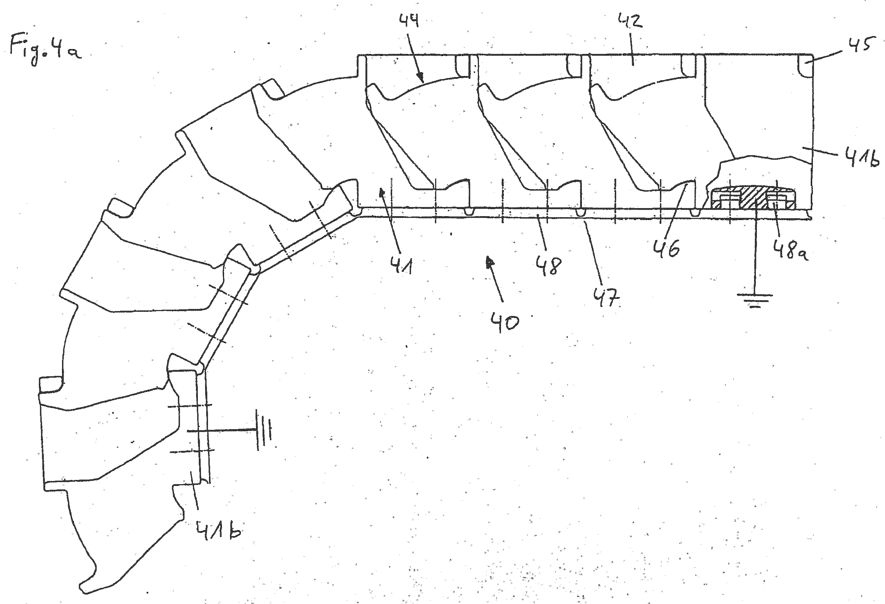

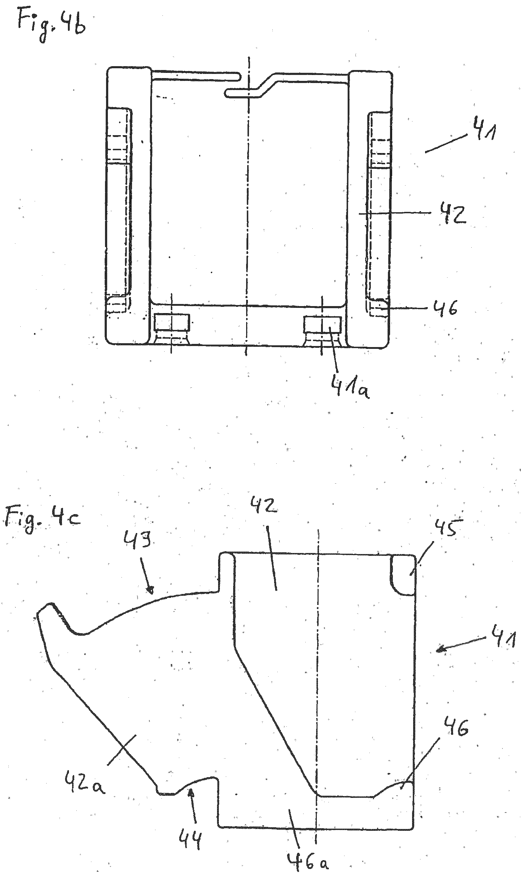

Figur 4 zeigt eine weitere Ausführungsform einer erfindungsgemäßen Kette 40, wobei die einzelnen Glieder 41 jeweils Seitenteile 42 mit stirnseitig vorstehenden Bereichen 42a, die mit dem benachbarten Glied überlappen, aufweisen. Die Glieder sind an einem biegbarem Band 48 befestigt, nach dem Ausführungsbeispiel mittels Rastmitteln, wozu die Rastvorsprünge 48a des Bandes in Ausnehmungen 41a der Glieder eingreifen können. Die überlappenden Bereiche 42a sind an ihrem oberen und unteren Ende jeweils mit bogenförmigen Abschnitten 43, 44 versehen, die als zudem als seitliche Führungen für das benachbarte Glied bei der Verschwenkbewegung dienen. Ein Höhenversatz benachbarter Glieder wird durch die die bogenförmigen Abschnitte 43, 44 über- bzw. untergreifenden Vorsprüngen 45, 46 an den Seitenteile der benachbarten Glieder verhindert.

Es versteht sich, dass das Gelenkband 48 unter Bereitstellung eines Leitfähigkeitspfades eine hohe elektrische Leitfähigkeit aufweisen kann, wobei sich das Band über die gesamte Kettenlänge erstrecken kann oder zwei Bandstücke an einem Glied hoher elektrischer Leitfähigkeit lageunveränderlich, z.B. durch die Rastmittel, befestigt sind, insbesondere unter einer Anpresskraft gegen das Band, so dass die Unterseiten der Bodenelemente und/oder der Seitenteile als elektrische Kontaktbereiche fungieren. Die Glieder können lösbar oder unlösbar an dem Band befestigt sein.

In Figur 4 sind beispielhaft in schematischer Weise zwei Glieder als geerdete Glieder 41b dargestellt, die elektrisch leitend mit einer Erde verbunden sind. Es versteht sich, dass die elektrischen Ableitungen zur Erde auch entlang der Kette geführt sein können. Der genannte Widerstand von ca. 10.000 Ohm kann somit auch zwischen den Gliedern 41b vorliegen. Die Glieder 41b werden dann durch einen durchgehenden Leitungspfad, z.B. in Form eines durchgehenden Bandes 48 miteinander verbunden. Derartige Anordnungen sind insbesondere bei sehr langen Ketten möglich. Es versteht sich, dass entsprechendes auch für die anderen Ausführungsbeispiele gilt.

Es versteht sich, dass die dargestellten Ausführungsformen stets als Kunststoffformteile hergestellt sein können. Insbesondere können die Ketten bzw. deren Glieder jeweils als Spritzgussteile hergestellt sein.

Die Ketten nach den Ausführungsbeispielen weisen jeweils über deren gesamte Länge einen elektrischen Widerstand von kleiner/gleich 20.000 Ohm, genauer ca. 6.000 bis 10.000 Ohm auf. Die Kettenlänge kann hierbei einen halben oder einen Meter oder länger betragen beispielsweise auch 10 Meter oder mehr.

### Bezugzeichenliste

- 1: Energieführungskette
- 2: Glied
- 3: Seitenteil
- 4a: Deckelelement
- 4b: Bodenelement
- 5: Obertrum
- 6: Umlenkbereich
- 7: Untertrum
- 8: Verbindungselement
- 8a: Übergangsbereich
- 11: Ausnehmung
- 11a: Stirnseite
- 12: biegeelastischer Bereich
- 14: Querschnittserweiterung
- 15: Befestigungsbereich
- 16: Aussparung
- 17: überlappender Bereich
- 18: Vorsprung
- 20: Kette
- 21: Glied
- 22: Gelenkelement
- 23: Seitenteil
- 24: Bodenelement
- 24a: stegförmiger Bereich
- 25: Deckelelement
- 26: Rastvorsprung
- 27: Vorsprung
- 28: axialer Vorsprung
- 29: Führungselement
- 30: Kette
- 31: Glied
- 32: Gelenkelement
- 33: Seitenteil
- 34: Bodenelement
- 35: Deckelelement
- 40: Kette
- 41: Glied
- 41a: Ausnehmung
- 42: Seitenteil
- 42a: überlappender Bereich
- 43, 44: bogenförmiger Abschnitt
- 45, 46: Vorsprung
- 47: Gelenkachse
- 48: Band
- 48a: Rastvorsprurig
- 49a: geerdetes Glied

## Patentansprüche

1. Energieführungskette zur Führung von Leitungen und Kabeln zwischen zwei Verbrauchern, von denen mindestens einer beweglich ist, wobei die Energieführungskette (1, 20, 30, 40) eine Vielzahl gelenkig miteinander verbundener Glieder (2, 21, 31, 41) aufweist, die jeweils gegenüberliegende Seitenteile (3, 23, 33, 42) und zumindest einen diese verbindende Quersteg (4a, 4b, 24, 34) unter Ausbildung eines Kabelführungskanals aufweisen, wobei die Glieder (2, 21, 31, 41) jeweils über mindestens eine Gelenkverbindung miteinander verbunden sind, die eine Verschwenkung benachbarter Glieder (2, 21, 31, 41) zueinander über einen Verschwenkwinkel ermöglicht, wobei die Energieführungskette (1, 20, 30, 40) unter Ausbildung eines Untertrums (7), eines Umlenkbereichs (6) und eines Obertrums (5) anordenbar ist und wobei zumindest ein jeweils zwei oder mehr Glieder (2, 21, 31, 41) miteinander verbindendes Verbindungselement (8, 22, 48) vorgesehen ist, welches gegenüber den Gliedern (2, 21, 31, 41) lageunveränderliche Kontaktbereiche (15, 58) bereitstellt **dadurch gekennzeichnet, dass** das Verbindungselement (8, 22, 48) elektrisch leitend ist, und separat aus einem unterschiedlichen Material gefertigt ist, wie die anderen Bereiche der Glieder, und dass die Glieder (2, 21, 31, 41) zumindest im Wesentlichen aus einem Kunststoffmaterial bestehen, die Glieder (2, 21, 31, 41) zumindest teilweise aus einem elektrisch leitfähigen Material bestehen, welches eine Ableitung von elektrischen Ladungen über zumindest einen Teil der Kettenlänge und damit eine Verwendung der Kette (1, 20, 30, 40) in ESD-Schutzzonen ermöglicht und dass durch die lageunveränderlichen Kontaktbereiche (15, 18, 44, 46, 56, 58) und die diese miteinander verbindenden Bereiche (24a, 52) der Glieder (2, 21, 31, 41) oder des Verbindungselementes (22) ein sich zumindest über mehrere Glieder (2, 21, 31, 41) erstreckender durchgehender Leitfähigkeitspfad mit einem niedrigen elektrischen Widerstand ausgebildet wird, der eine Verwendung der Kette (1, 20, 30, 40) in ESD-Schutzzonen ermöglicht, wobei das Verbindungselement (8, 22, 48) aus einem Material mit einer höheren spezifischen elektrischen Leitfähigkeit gefertigt ist, als die Glieder (2, 21, 31, 41) .

2. Energieführungskette nach Anspruch 1, **dadurch gekennzeichnet , dass** der durchgehende elektrische Leitfähigkeitspfad sich über die gesamte Länge der Energieführungskette (1, 20, 30, 40) erstreckt.

3. Energieführungskette nach Anspruch 1 oder 2, **dadurch gekennzeichnet , dass** die Kontaktbereiche des zumindest einen Verbindungselementes (8) und die diese miteinander verbindenden Bereiche (24a) der Glieder einen niedrigen spezifischen elektrischen Widerstand aufweist.

4. Energieführungskette nach einem der Ansprüche 1 bis 3, **dadurch gekennzeichnet , dass** zumindest an einer oder beiden Seitenteile der Glieder (21) in Richtung auf das jeweils benachbarte Glied ein vorstehender Bereich (29) vorgesehen ist, der an dem Seitenteil des benachbarten Gliedes (21) über den Verschwenkwinkel in währendem Kontakt anliegt.

5. Energieführungskette nach Anspruch 4, **dadurch gekennzeichnet , dass** an beiden Seitenteilen eines jeweiligen Gliedes (2, 21) in Richtung auf das benachbarte Glied vorstehende Bereiche (18) vorgesehen sind, die die einander gegenüberliegenden Seitenteile des benachbarten Gliedes beide jeweils innenseitig oder außenseitig umgeben und zumindest mit Teilbereichen mit Federkraft an dem jeweiligen Seitenteil anliegen.

6. Energieführungskette nach einem der Ansprüche 1 bis 5, **dadurch gekennzeichnet , dass** die Glieder paarweise zumindest ein Verbindungselement (8) aufweisen, welches mit voneinander beabstandeten Befestigungsbereichen (15) an jeweils einem der Glieder festgelegt ist und dass das Verbindungselement (8) als bei der Verschwenkung der Glieder zueinander elastisch oder nicht-elastisch deformierbares Element ausgeführt ist.

7. Energieführungskette nach einem der Ansprüche 1 bis 6, **dadurch gekennzeichnet , dass** das Verbindungselement (8) als benachbarte Glieder verbindendes Gelenkelement ausgeführt ist.

8. Energieführungskette nach Anspruch 7, **dadurch gekennzeichnet , dass** das Verbindungselement (8) teilweise oder vollständig im Querschnittsbereich jeweils des Seitenteils (3) oder des Quersteges der jeweiligen Glieder angeordnet ist oder bei sich seitlich überlappenden Gliedern in dem Querschnittsbereich der überlappenden Bereiche beider Glieder angeordnet ist.

9. Energieführungskette nach einem der Ansprüche 1 bis 8, **dadurch gekennzeichnet , dass** das Verbindungselement (8, 22) mehrere Glieder miteinander unter Bildung eines durchgehenden Leitfähigkeitspfades verbindet.

10. Energieführungskette nach Anspruch 9, **dadurch gekennzeichnet , dass** sich das Verbindungselement (8, 22) über die gesamte Länge der Energieführungskette erstreckt, und dass das Verbindungselement die die Glieder jeweils paarweise miteinander verbindende Gelenkverbindung bereitstellt.

11. Energieführungskette nach einem der Ansprüche 1 bis 10, **dadurch gekennzeichnet , dass** die Verbindungselemente unter Presskraft an dem jeweils benachbarten Glied anliegen.

12. Energieführungskette nach einem der Ansprüche 1 bis 11, **dadurch gekennzeichnet , dass** die Verbindungselemente zumindest im Wesentlichen aus einem Kunststoffmaterial bestehen.

13. Energieführungskette nach einem der Ansprüche 1 bis 12, **dadurch gekennzeichnet , dass** an zumindest einem oder beiden Enden der Energieführungskette das jeweilige Endglied als Endbefestigungsteil ausgebildet und mit Befestigungsmitteln zur Befestigung der Energieführungskette an einem Verbraucher versehen ist, und dass die Endbefestigungsglieder über eine elektrische Verbindung mit dem jeweils benachbarten Glied verbunden sind.

14. Energieführungskette nach einem der Ansprüche 1 bis 13, **dadurch gekennzeichnet , dass** zumindest eines oder mehrere der Glieder (41b), die zwischen den Endbefestigungsgliedern der Kette angeordnet sind oder diese mit umfassen, geerdet sind oder mit einer Erdungseinrichtung verbunden oder mit Mitteln zur elektrisch leitenden Verbindung mit einer Erdungseinrichtung ausgestattet sind.

15. Energieführungskette nach einem der Ansprüche 1 bis 14, **dadurch gekennzeichnet , dass** diese über deren gesamte Länge oder über einen Abstand in Kettenlängsrichtung zwischen zwei benachbarten geerdeten oder mit einer Erdungseinrichtung oder mit Befestigungsmitteln für diese versehenen Gliedern einen elektrischen Widerstand R von ca. 50.000 Ohm oder weniger und/oder einen elektrischen Oberflächenwiderstand Rₛ und/oder einen Endzu-End-Widerstand Rₑ und/oder einen Punkt-zu-Punkt-Widerstand Rₚ von ≤ 1 × 10¹⁰ Ohm aufweist.

## Claims

1. Energy guiding chain for guiding lines and cables between two consumers, at least one of which is mobile, where the energy guiding chain (1, 20, 30, 40) displays a plurality of links (2, 21, 31, 41) connected to each other in articulated fashion, each of which displays opposite side pieces (3, 23, 33, 42) and at least one cross-member (4a, 4b, 24, 34) connecting them, forming a cable guide duct, where the links (2, 21, 31, 41) are connected to each other by at least one pivoted connection that permits pivoting of adjacent links (2, 21, 31, 41) through a pivoting angle relative to each other, where the energy guiding chain (1, 20, 30, 40) can be arranged to form a lower run (7), a curved section (6) and an upper run (5), and where at least one connecting element (8, 22, 48) connecting two or more links (2, 21, 31, 41) to each other in each case is provided, which provides contact areas (15, 58) remaining in unchanging position in relation to the links (2, 21, 31, 41), **characterized in that** the connecting element (8, 22, 48) is electrically conducting and is separately fabricated from a different material than the other areas of the links, such as the other areas of the links, and that the links (2, 21, 31, 41) consist at least substantially of a plastic material, that the links (2, 21, 31, 41) consist at least partly of an electrically conductive material that permits the discharge of electrical charges over at least part of the chain length and thus use of the chain (1, 20, 30, 40) in ESD protection zones and **in that** the contact areas (15, 18, 44, 46) which are unchangeable in position and the areas (24a, 52) of the links (2, 21, 31, 41) or the connecting element (22) connecting them form a continuous conductivity path with low electrical resistance, which extends at least over several links and permits use of the chain (1, 20, 30, 40) in ESD protection zones, wherein the connecting element (8, 22, 48) is made of a material with a higher specific conductivity than the links (2, 21, 31, 41).

2. Energy guiding chain according to claim 1, **characterized in that** the continuous electrical conductivity path extends over the entire length of the energy guiding chain (1, 20, 30, 40).

3. Energy guiding chain according to claim 1 or 2, **characterized in that** the contact areas of the at least one connecting element (8), and the areas (24a) of the links connecting them display low resistivity.

4. Energy guiding chain according to one of claims 1 to 3, **characterized in that** an area (29) that projects towards the respectively adjacent link is provided, at least on one, or both, of the side pieces of the links (21), being in permanent contact with the side piece of the adjacent link (21) over the pivoting angle.

5. Energy guiding chain according to claim 4, **characterized in that** areas (18) projecting towards the adjacent link are provided on both side pieces of a respective link (2, 21), which both surround the opposite side pieces of the adjacent link on the inside or on the outside and have at least partial areas in contact with the respective side piece under spring force.

6. Energy guiding chain according to one of claims 1 to 5, **characterized in that** pairs of links display at least one connecting element (8), which is fixed in place by fastening areas (15), spaced apart from each other, on one of the links in each case, and **in that** the connecting element (8) is designed as an element capable of elastic or non-elastic deformation during pivoting of the links relative to each other.

7. Energy guiding chain according to one of claims 1 to 6, **characterized in that** the connecting element (8) is designed as a joint element connecting adjacent links.

8. Energy guiding chain according to claim 7, **characterized in that** the connecting element (8) is in each case located partly or entirely in the cross-sectional area of the side piece (3) or of the cross-member of the respective links or, in the event of laterally overlapping links, in the cross-sectional area of the overlapping areas of the two links.

9. Energy guiding chain according to one of claims 1 to 8, **characteri zed in that** the connecting element (8, 22) connects several links to each other, forming a continuous conductivity path.

10. Energy guiding chain according to claim 9, **characterized in that** the connecting element (8, 22) extends over the entire length of the energy guiding chain, and **in that** the connecting element provides the pivoted connection connecting the links to each other in pairs.

11. Energy guiding chain according to one of claims 1 to 10, **characteri zed in that** the connecting elements contact the respectively adjacent link under force of pressure.

12. Energy guiding chain according to one of claims 1 to 11, **characterized in that** the links and/or the connecting elements at least essentially consist of a plastic material.

13. Energy guiding chain according to one of claims 1 to 12, **characterized in that** the respective end link on at least one end, or both ends, of the energy guiding chain is designed as an end fastening element and provided with fastening means for fastening the energy guiding chain on a consumer, and **in that** the end fastening links are connected to the respectively adjacent link via an electrical connection.

14. Energy guiding chain according to one of claims 1 to 13, **characterized in that** at least one, or more, of the links (41b) that are located between the end fastening links of the chain, or also encompass them, is grounded, or connected to a grounding device, or fitted with means for electrically conductive connection to a grounding device.

15. Energy guiding chain according to one of claims 1 to 14, **characterized in that,** over its entire length, or over a distance in the longitudinal direction of the chain between two adjacent links that are grounded, or provided with a grounding device, or with fastening means for such a device, the chain displays an electrical resistance R of approx. 50,000 ohm or less and/or an electrical surface resistance Rₛ and/or an end-to-end resistance Rₑ and/or a point-to-point resistance Rₚ of ≤ 1 × 10¹⁰ ohm.

## Revendications

1. Chaîne de guidage d'éléments de transport d'énergie destinée à guider des tuyaux et câbles entre deux consommateurs, dont l'un au moins est mobile, la chaîne de guidage d'éléments de transport d'énergie (1, 20, 30, 40) comprenant une pluralité de maillons (2, 21, 31, 41) articulés les uns aux autres et respectivement présentant des pièces latérales (3, 23, 33, 42) opposées et au moins une traverse (4a, 4b, 24, 34) les reliant sous formation d'un canal de guidage de câbles, lesdits maillons (2, 21, 31, 41) étant respectivement connectés les uns avec les autres par au moins un raccordement articulé permettant un pivotement des maillons voisins (2, 21, 31, 41) les uns par rapport aux autres sur un angle de pivotement, la chaîne de guidage d'éléments de transport d'énergie (1, 20, 30, 40) étant arrangeable sous formation d'un brin inférieur (7), d'une zone de changement de direction (6) et d'un brin supérieur (5), au moins un élément de liaison (8, 22, 48) respectivement connectant deux ou plusieurs de maillons les uns avec les autres étant prévu, élément de liaison qui présente des zones de contact (15, 58) fixes en position par rapport aux maillons (2, 21, 31, 41), ***caractérisée* en ce que** l'élément de liaison (8, 22, 48) est électriquement conducteur et est fabriqué séparément dans un matériau différent de celui des autres parties des maillons, comme les autres zones des maillons, et **en ce que** les maillons (2, 21, 31, 41) sont au moins essentiellement constitués d'un matériau plastique, les maillons (2, 21, 31, 41) consistent en un matériel conducteur, au moins en partie, ledit matériau permettant une dérivation de charges électriques à travers au moins une partie de la longueur de chaîne et ainsi une utilisation de la chaîne (1, 20, 30, 40) dans des zones de protection DES, et que par lesdites zones de contact à position fixe (15, 18, 44, 46, 56, 58) et les parties (24a, 52) des maillons (2, 21, 31, 41) ou de l'élément de liaison (22) les connectant est formé un chemin conducteur continu s'étendant au moins sur plusieurs maillons (2, 21, 31, 41) de manière continue et présentant une faible résistance électrique de sorte à permettre une utilisation de la chaîne (1, 20, 30, 40) dans les zones de protection DES, l'élément de liaison (8, 22, 48) étant fabriqué à partir d'un matériau ayant une conductivité spécifique supérieure à celle des maillons (2, 21, 31, 41).

2. Chaîne de guidage d'éléments de transport d'énergie selon la revendication 1, *caractérisée* un ce que ledit chemin conducteur continu s'étend sur toute la longueur de la chaîne de guidage d'éléments de transport d'énergie (1, 20, 30, 40).

3. Chaîne de guidage d'éléments de transport d'énergie selon la revendication 1 ou 2, ***caractérisée* en ce que** les zones de contact de l'au moins un élément de liaison (8) et les zones (24a) des maillons les connectant, présentent une résistivité moindre.

4. Chaîne de guidage d'éléments de transport d'énergie selon l'une des revendications 1 à 3, ***caractérisé* en ce que** sur l'une au moins ou sur les deux pièces latérales des maillons (21) est prévu, en direction vers le maillon respectivement avoisinant, une partie saillante (29) s'appliquant de manière restante contre la partie latérale du maillon voisin (21) sur l'angle de pivotement.

5. Chaîne de guidage d'éléments de transport d'énergie selon la revendication 4, ***caractérisée* en ce qu'**il sont prévues sur les deux parties latérales d'un maillon respectif (2, 21) et en direction vers le maillon voisin, des parties saillantes (18) environnant les parties latérales opposées du maillon voisin de l'intérieur et de l'extérieur et s'appliquant contre la partie latérale respective par force de ressort, au moins en sections.

6. Chaîne de guidage d'éléments de transport d'énergie selon l'une des revendications 1 à 5, ***caractérisé* en ce que** les maillons par paires comportent au moins un élément de liaison (8) respectivement fixé à l'un des maillons par des zones de fixation (15) écartées les unes par rapport aux autres, et que l'élément de liaison (8) est configuré comme un élément déformable élastiquement ou non-élastiquement lors du pivotement des maillons les uns par rapport aux autres.

7. Chaîne de guidage d'éléments de transport d'énergie selon l'une des revendications 1 à 6, ***caractérisé* en ce que** l'élément de liaison (8) est configuré comme un élément de charnière reliant des maillons voisins.

8. Chaîne de guidage d'éléments de transport d'énergie selon la revendication 7, ***caractérisée* en ce que** l'élément de liaison (8) est disposé dans la zone de section transversale respective de la pièce latérale (3) ou de la traverse du maillons respectifs, en partie ou en entier, ou dans la zone de la section transversale des parties chevauchants des deux maillons, en cas de maillons chevauchant latéralement.

9. Chaîne de guidage d'éléments de transport d'énergie selon l'une des revendications 1 à 8, ***caractérisé* en ce que** l'élément de liaison (8, 22) relie plusieurs maillons les uns avec les autres sous formation d'un chemin conducteur continu.

10. Chaîne de guidage d'éléments de transport d'énergie selon la revendication 9, ***caractérisée* en ce que** l'élément de liaison (8, 22) s'étend sur toute la longueur de la chaîne de guidage d'éléments de transport d'énergie et que l'élément de liaison présente ledit raccordement articulé reliant les maillons par paires.

11. Chaîne de guidage d'éléments de transport d'énergie selon l'une des revendications 1 à 10, ***caractérisé* en ce que** les éléments de liaison s'appliquent contre le maillon voisin respectif sous une force de pression.

12. Chaîne de guidage d'éléments de transport d'énergie selon l'une des revendications 1 à 11, ***caractérisé* en ce que** les éléments de liaison consistent en un matériau plastique, au moins essentiellement.

13. Chaîne de guidage d'éléments de transport d'énergie selon l'une des revendications 1 à 12, ***caractérisée* en ce qu'**au moins sur l'une ou sur les deux extrémités de la chaîne de guidage d'éléments de transport d'énergie, le maillon d'extrémité respectif est configuré comme une pièce de fixation finale et est muni des moyens de fixation pour la fixation de la chaîne de guidage d'éléments de transport d'énergie sur un consommateur, et que les maillons de fixation finals sont connectés avec le maillon respectivement avoisiné par une connexion électrique.

14. Chaîne de guidage d'éléments de transport d'énergie selon l'une des revendications 1 à 13, ***caractérisée* en ce qu'**au moins un ou plusieurs de maillons (41b) disposés entre les maillons de fixation finals ou les comprenant sont reliés à la terre ou à un dispositif de mise à la terre ou sont munis des moyens pour la connexion conductrice avec un dispositif de mise à la terre.

15. Chaîne de guidage d'éléments de transport d'énergie selon l'une des revendications 1 à 14, ***caractérisée* en ce que** la même présente, sur toute la longueur ou sur une distance dans la direction longitudinale de chaîne entre deux maillons voisins reliés à la terre ou munis d'un dispositif de mise à la terre ou des moyens de fixation pour ces maillons, une résistance R d'environ 50.000 Ohm ou moins et/ou une résistance superficielle Rₛ et/ou une résistance de bout à bout Rₑ et/ou une résistance de point à point Rₚ de ≤ 1 × 10¹⁰ Ohm.
